# EUROPÄISCHE PATENTSCHRIFT

(11) **EP 0 851 015 B1**
(45) Veröffentlichungstag und Bekanntmachung des Hinweises auf die Patenterteilung: **02.04.2003**
(21) Anmeldenummer: 97122391.2
(22) Anmeldetag: 18.12.1997
(51) Int. Cl.: C09J 131/02, C08F 263/02

(54) **VOC-arme Klebemittel**
Adhesive
Adhésif

(30) Priorität: 23.12.1996 DE 19654240
(43) Veröffentlichungstag der Anmeldung: 01.07.1998
(73) Patentinhaber: Wacker-Chemie GmbH, 81737 München (DE)
(72) Erfinder: Schilling, Bernd, Dr., 84489 Burghausen (DE); Höfler, Heinz, 84489 Burghausen (DE)
(74) Vertreter: Schuderer, Michael, Dr.

(56) Entgegenhaltungen:
- EP-A- 0 687 719
- EP-A- 0 702 057
- US-A- 3 853 686
- US-A- 5 349 009
- PATENT ABSTRACTS OF JAPAN vol. 006, no. 011 (C-088), 22.Januar 1982 & JP 56 135575 A (DAINIPPON INK & CHEM INC), 23.Oktober 1981,
- PATENT ABSTRACTS OF JAPAN vol. 011, no. 101 (C-413), 31.März 1987 & JP 61 252280 A (CHUO RIKA KOGYO KK), 10.November 1986,

## Beschreibung

Die Erfindung betrifft VOC-arme Klebemittel, Verfahren zur Herstellung VOC-armer Klebemittel sowie deren Verwendung.

Die Diskussion in der Öffentlichkeit zur Verwendung umweltfreundlicher, sogenannter "VOC-armer" Produkte (VOC = volatile organic compound) im Wohnbereich beginnt auch den Klebstoffsektor verstärkt zu erfassen. Im Mittelpunkt der Diskussion stehen momentan Fußbodenklebstoffe, von denen der Großteil der Handelsprodukte, neben der wäßrigen Polymerdispersion, als Formulierungsbestandteile höhere Mengen an hochsiedenden organischen Substanzen wie Kolophonium oder Weichmacher enthalten, die als "VOC" in den Wohnbereich emittiert werden können.

Holzklebemittel für den nicht-tragenden Bereich sind fast ausschließlich auf Basis von wäßrigen Dispersionen von Vinylacetat-Homopolymeren und Verfilmungshilfsmittel aufgebaut. Bei den Verfilmungshilfsmittel handelt es sich dabei um niedrigoder hochsiedende Lösungsmittel, welche in der Formulierung die Filmbildungstemperatur herabsetzen sollen. Aufgrund des Verfilmungsmittelgehalts sind daher auch Holzklebemittel als potentielle Langzeit-VOC-Quelle in Möbeln, Fenster, Türen und Parkettfußböden im Wohnbereich anzusehen.

Die EP-A 728765 beschreibt die Beseitigung von niedermolekularen organischen Verunreinigungen durch Pervaporation. Mit destillativen Verfahren oder Membranverfahren können zwar geringe Mengen an Restmonomeren oder Lösungsmittelresten entfernt werden. Die Notwendigkeit der Formulierung mit flüchtigen Zusatzstoffen wie Verfilmungshilfsmitteln oder Weichmachern kann damit aber nicht umgangen werden.

In der WO-A 95/21884 wird vorgeschlagen, den Zusatz von Verfilmungshilfsmitteln und Weichmachern dadurch zu vermeiden, indem die Polymerisate durch Copolymerisation mit geeigneten Comonomeren innerlich plastifiziert werden. Grundsätzlich ist dies auch für Vinylesterpolymerisate mittels Copolymerisation entsprechender Mengen an Ethylen möglich. Nachteilig ist allerdings, daß Vinylacetat-Ethylen-Copolymerisate schlechte Wärmefestigkeit, extrem schlechte Creepbeständigkeit bei statischer Dauerbelastung und langsame Abbindegeschwindigkeiten zeigen. In der Praxis können diese daher nicht eingesetzt werden.

Die US-A 5,349,009 beschreibt VOC-arme Klebemittelzusammensetzungen bei denen die Zugabe von Verfilmungshilfsmitteln zu Polyvinylacetat-Dispersionen dadurch vermieden wird, indem diese mit Dispersionen von weichen Vinylacetat-Ethylen-Copclymerisaten modifiziert werden. Die gleiche Vorgehensweise wird in der EP-A 702057 beschrieben, wobei hier Lösemittel- und Weichmacherfreie Klebstoffe auf der Basis eines Gemisches aus Vinylester-Homopolymer und Vinylester-Ethylen-Copolymer eingesetzt werden. Gegenüber Klebemitteln auf Vinylacetat-Ethylen-Basis läßt sich damit zwar die Abbindegeschwindigkeit verbessern, Wärmebeständigkeit und Creepbeständigkeit sind aber für die praktische Anwendung ungeeignet.

Es bestand daher die Aufgabe, VOC-arme Klebemittel auf der Basis von wäßrigen Polyvinylester-Dispersionen zur Verfügung zu stellen, welche ohne Zugabe von Verfilmungshilfsmitteln und Weichmacher eingesetzt werden können, und bezüglich Abbindegeschwindigkeit, Wärmebeständigkeit und Creepbeständigkeit den herkömmlichen Lösemittel- und Weichmacherhaltigen Polyvinylester-Dispersionen zumindest gleichwertig sind.

Überraschenderweise wurde gefunden, daß diese Aufgabe mit einer Klebemittelzusammensetzung gelöst werden kann, welche neben Polyvinylester-Anteilen und Vinylester-Ethylen-Copolymer-Anteilen noch teil- oder vollverseiften, hochviskosen Polyvinylalkohol enthält. Besonders gute Ergebnisse wurden mit Zusammensetzungen erhalten, welche in einem 2-Stufen-Prozeß hergestellt wurden, bei dem eine wäßrige Vinylester-Ethylen-Copolymerisat-Dispersion mit Polyvinylester- und Vinylester-Ethylen-Domainen in Gegenwart von teil- oder vollverseiftem, hochviskosem Polyvinylalkohol hergestellt wurde.

Gegenstand der Erfindung sind VOC-arme Klebemittel-Zusammensetzungen auf der Basis einer Polyvinylalkohol-stabilisierten wäßrigen Vinylester-Ethylen-Copolymerisat-Dispersion mit einem Festgehalt von 30 bis 65 Gew% mit
a) 100 Gewichtsteilen Polyvinylester-Anteil,
b) 10 bis 100 Gewichtsteilen Vinylester-Ethylen-Copolymer-Anteil, und
c) 1 bis 10 Gewichtsteilen eines teil- oder vollverseiften Polyvinylalkohols mit einer Höppler-Viskosität von 40 bis 120 mPas (4 %-ige wäßrige Lösung) und einem Hydrolysegrad von 85 bis 100 Mol%.

Der Polyvinylester-Anteil a) enthält 80 bis 100 Gew% eines oder mehrerer Vinylester von verzweigten oder unverzweigten Alkylcarbonsäuren mit 1 bis 18 C-Atomen und 0 bis 20 Gew% weitere ein- oder mehrfach ethylenisch ungesättigte Monomereinheiten, jeweils bezogen auf das Gesamtgewicht des Polymeranteils a).

Der Vinylester-Ethylen-Copolymerisat-Anteil b) enthält 60 bis 95 Gew%, eines oder mehrerer Vinylester von verzweigten oder unverzweigten Alkylcarbonsäuren mit 1 bis 18 C-Atomen, 5 bis 20 Gew% Ethylen und 0 bis 20 Gew% weitere ein- oder mehrfach ethylenisch ungesättigte Monomereinheiten, jeweils bezogen auf das Gesamtgewicht des Polymeranteils b).

Geeignete Vinylester sind beispielsweise Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit bis. zu 10 C-Atomen, beispielsweise VeoVa9^{R} oder VeoVa10^{R}.

Vorzugsweise wird in den Polymeranteilen a) und b) als Vinylester Vinylacetat eingesetzt. Es können auch Gemische von Vinylacetat mit einem oder mehreren weiteren Vinylestern eingesetzt werden, wobei das Mischungsverhältnis Vinylacetat/Vinylester 50/50 bis 90/10 (w/w) beträgt. Beispiele für bevorzugte Gemische sind Gemische von Vinylacetat mit Vinyl-2-ethylhexanoat, Vinyllaurat, 1-Methylvinylacetat, Vinylpivalat, VeoVa9^{R} und/oder VeoVa10^{R}.

Geeignete weitere ethylenisch ungesättigter Monomere sind ethylenisch ungesättigte Carbonsäuren, vorzugsweise Acrylsäure oder Methacrylsäure; ethylenisch ungesättigten Carbonsäureamide, vorzugsweise Acrylamid; ethylenisch ungesättigten Sulfonsäuren bzw. deren Salze, vorzugsweise Vinylsulfonsäure, 2-Acrylamido-2-methyl-propansulfonsäure.

Weitere Beispiele für ethylenisch ungesättigte Monomere sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether, wie der Isobutoxyether, oder Ester des N-Methylolacrylamids, des N-Methylolmethacrylamids oder des N-Methylolallylcarbamats.

Als Polyvinylesteranteil a) bevorzugt wird Polyvinylacetat. Für den Vinylester-Ethylen-Copolymer-Anteil b) wird Vinylacetat-Ethylen-Copolymerisat mit einem Ethylenanteil von 5 bis 20 Gew% bevorzugt. Zur Verbesserung der Dispersionsstabilität, zum Erhalt von vernetzbaren Funktionen und zur internen Vernetzung (beispielsweise um die Beanspruchungsgruppe D3 zu erfüllen) können die obengenannten Comonomer-Einheiten in den genannten Mengen jeweils in a) und b) enthalten sein. Bevorzugt werden (Meth)Acrylsäure, Acrylamid, Vinylsulfonsäure; N-Methylolacrylamid und N-Methylolmethacrylamid sowie deren Isobutoxyether; Divinyladipat und Triallylcyanurat.

Geeignete Polyvinylalkohole c) sind teil- oder vollverseifte Vinylalkohol-Homo- oder -Copolymerisate mit einem Hydrolysegrad von 85 bis 100 Mol% und einer Höppler-Viskosität von 40 bis 120 mPas, vorzugsweise 50 bis 80 mPas, gemessen in 4 %-iger wäßriger Lösung (Methode nach Höppler, DIN 53015). Besonders bevorzugt werden Vinylalkohol-Homopolymerisate oder Vinylalkohol-Copolymerisate, jeweils mit einem Hydrolysegrad von 98 bis 100 Mol% und einer Höppler-Viskosität von 50 bis 80 mPas, gemessen in 4 %-iger wäßriger Lösung (Methode nach Höppler, DIN 53015).

Bevorzugte Vinylalkohol-Copolymerisate sind solche, welche neben Vinylalkohol-Einheiten noch 0.5 bis 10 Gew.%, vorzugsweise 1 bis 5 Gew.%, jeweils bezogen auf das Gesamtgewicht des Copolymerisats, 1-Methylvinylalkohol-Einheiten enthalten. Die genannten Vinylalkohol-Homo- und -Copolymerisate sind im Handel erhältlich bzw., in dem Fachmann bekannter Art und Weise, durch Hydrolyse oder Alkoholyse der entsprechenden Vinylacetat-Homo- und -Copolymerisate zugänglich.

Im allgemeinen werden Klebemittel-Zusammensetzungen angestrebt, welche eine Mindestfilmbildungstemperatur von -5°C bis +5°C zeigen. Bevorzugte Zusammensetzungen enthalten daher auf 100 Gewichtsteile des Polyvinylester-Anteils a), 40 bis 60 Gewichtsteile des Vinylester-Ethylen-Copolymer-Anteils b) und 1 bis 5 Gewichtsteile des hochviskosen Polyvinylalkohols c).

Die beanspruchten Klebemittel-Zusammensetzungen können durch einfaches Vermischen der entsprechenden Vinylester-Polymere a), der Vinylester-Ethylen-Copolymere b) und des hochviskosen Polyvinylalkohols c) in den angegebenen Mengenverhältnissen hergestellt werden.

Völlig unerwartet wurde aber festgestellt, daß bei der Herstellung der Klebemittelzusammensetzung durch Polymerisation des Polyvinylester-Anteils a) und des Vinylester-Ethylen-Copolymeranteils b) in einer Eintopf-Reaktion, in Gegenwart des hochviskosen Polyvinylalkohol-Anteils c) oder bei dessen nachträglicher Zugabe, Zusammensetzungen mit besonders vorteilhaftem Eigenschaftsprofil erhalten werden.

Ein weiterer Gegenstand der Erfindung ist daher ein Verfahren zur Herstellung VOC-armer Klebemittel-Zusammensetzungen auf der Basis einer Polyvinylalkohol-stabilisierten wäßrigen Polyvinylester-Dispersion mit einem Festgehalt von 30 bis 65 Gew% durch radikalische, wäßrige Emulsionspolymerisation in Gegenwart von Dispergiermitteln und Radikalinitiatoren, dadurch gekennzeichnet, daß
1) 10 bis 100 Gewichtsteile eines oder mehrerer Vinylester von verzweigten oder unverzweigten Alkylcarbonsäuren mit 1 bis 18 C-Atomen, und
   0 bis 20 Gewichtsteile weiterer ein oder mehrfach ethylenisch ungesättigter Monomere,
   in Gegenwart von Ethylen, bei einem Ethylendruck von 20 bis 80 bar abs., bis zu einem Umsatz von wenigstens 90 Mol% polymerisiert werden, und
2) weitere 100 Gewichtsteile eines oder mehrerer Vinylester von verzweigten oder unverzweigten Alkylcarbonsäuren mit 1 bis 18 C-Atomen, und
   0 bis 50 Gewichtsteile weiterer ein oder mehrfach ethylenisch ungesättigter Monomere, polymerisiert werden,
wobei die Polymerisation gegebenenfalls in Gegenwart von 1 bis 10 Gewichtsteilen eines hochviskosen Polyvinylalkohols mit einer Höppler-Viskosität von 40 bis 120 mPas (4 %-ige wäßrige Lösung) und einem Hydrolysegrad von 85 bis 100 Mol% durchgeführt wird oder dieser nach Abschluß der Polymerisation zugemischt wird.

Zur Polymerisation wird üblicherweise das Reaktionswasser, gegebenenfalls zusammen mit dem hochviskosen Polyvinylalkohol, vorgelegt. Die Monomerphase der ersten Stufe kann ganz oder teilweise vorgelegt werden. Vorzugsweise wird der Vinylester-Monomeranteil vollständig vorgelegt.

Die Dispergiermittel, wie Emulgatoren oder Schutzkolloide können ganz oder teilweise vorgelegt werden. Vorzugsweise wird so vorgegangen, daß ein Teil der Dispergiermittel vorgelegt wird und der Rest im Verlauf der zweistufigen Polymerisation kontinuierlich oder stufenweise zudosiert wird.

Als Dispergiermittel können alle üblicherweise bei der Emulsionspolymerisation verwendeten Emulgatoren eingesetzt werden. Vorzugsweise werden 1 bis 4 Gew.%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können auch Schutzkolloide, vorzugsweise in Mengen von bis zu 10 Gew.%, bezogen auf das Gesamtgewicht der Monomeren, eingesetzt werden. Beispiele hierfür sind teilverseifte Polyvinylalkohole mit einem Hydrolysegrad von 70 bis 95 Mol% und einer Höppler-Viskosität von 10 bis 25 mPas, Polyvinylpyrrolidone mit einem Molekulargewicht von 5000 bis 400000, Hydroxyethylcellulosen mit einem Substitutionsgradbereich von 1.5 bis 3. In einer bevorzugten Ausführungsform wird die Polymerisation in Gegenwart des hochviskosen Polyvinylalkohols c) durchgeführt. Der Polyvinylalkohol wird dabei, gegebenenfalls zusammen mit weiterem Schutzkolloid, zu Beginn der Polymerisation vorgelegt.

Die Polymerisation wird vorzugsweise in einem Temperaturbereich von 40°C bis 80°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 1.0 Gew.%, bezogen auf das Gesamtgewicht der Monomeren, eingesetzt werden. Beispiele hierfür sind Ammonium- und Kaliumpersuifat, Alkylhydroperoxide, wie t-Butylhydroperoxid; Wasserstoffperoxid. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Formaldehydsulfoxylat-Salze, Natriumbisulfit oder Ascorbinsäure. Der Initiator kann ganz oder teilweise vorgelegt werden oder im Verlauf der Polymerisation kontinuierlich oder stufenweise zugegeben werden. Bei der Redoxinitiierung werden vorzugsweise eine oder beide Redox-Katalysatorkomponenten während der Polymerisation dosiert.

Nach dem Aufheizen auf Reaktionstemperatur wird Ethylen aufgedrückt. Vorzugsweise wird bei einem Druck von 20 bis 40 bar abs. gearbeitet. Bei Erreichen eines Umsatzes von 90 bis 100 Mol% wird der Ethylendruck reduziert und das Ethylen abgelassen. Es kann auch so verfahren werden, daß bei Erreichen eines Umsatzes von 60 % kein weiteres Ethylen mehr aufgedrückt wird, und die Polymerisation unter diesen Bedingungen bis zum Erreichen eines Umsatzes von 90 bis 100 % fortgeführt wird.

Die zweite Stufe der Polymerisation wird nach dem Dosierverfahren durchgeführt, vorzugsweise werden die Monomere der zweiten Stufe, getrennt oder als Gemisch, als Voremulsion kontinuierlich zudosiert. Alle Dosierungen erfolgen vorzugsweise im Maße des Verbrauchs der jeweiligen Komponente.

Der für die Polymerisation gewünschte pH-Bereich, der im allgemeinen zwischen 3 und 7 liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe, zugesetzt werden.

Nach Abschluß der Polymerisation kann die Dispersion zur weiteren Reduzierung des Gehalts an flüchtigen Bestandteilen destilliert werden oder mit Dampf oder Inertgas gestrippt werden. Diese Verfahrensweisen sind dem Fachmann bekannt und bedürfen daher keiner weiteren Erläuterung. Bevorzugt wird die Nachbehandlung mittels Dampfstrippen, da damit neben des schnellen Austrags von Restmonomer und weiteren flüchtigen Bestandteilen auch eine Erhöhung des Feststoffgehalts der Dispersion resultiert.

Der Feststoffgehalt der damit erhältlichen wäßrigen Dispersionen beträgt vorzugsweise 30 bis 65 Gew.%.

Die erfindungsgemäßen Klebstoffdispersionen eignen sich hervorragend als Klebemittel zum Verkleben unterschiedlicher poröser Substrate wie Holz, Pappe und Papier. Besonders geeignet sind die Klebstoffdispersionen als Holzklebstoffe, Parkettklebstoffe, Verpackungsklebstoffe und Buchbindeklebstoffe.

Für diese Anwendungen können die Klebstoffdispersionen mit den entsprechenden Zusatzstoffen modifiziert werden. Geeignete Zusatzstoffe sind Füllstoffe wie Kreide oder Gips. Weiter können der Klebstoffdispersion Netzmittel, Dispergiermittel, Verdikker, Entschäumer und/oder Konservierungsstoffe zugegeben werden.

Speziell für die Anwendung als Holzklebemittel können zur Erhöhung der Kalt- und Heißwasserfestigkeit die dafür üblichen Vernetzungsmittel, beispielweise wasserlösliche Metallsalze von einbasigen Säuren wie Al(III)- und Zr(IV)-Salze, zugegeben werden. Bevorzugt werden Aluminiumchlorid und Aluminiumnitrat zugegeben.

Die nachfolgenden Beispiele dienen zur weiteren Erläuterung der Erfindung:

### Beispiel 1 :

In einem 16 l-Autoklaven mit automatischen Dosiervorrichtungen, Temperaturregelungen und Rührwerk wurden 6000 g 10 %-ige Polyvinylalkohollösung vorgelegt. Der Polyvinylalkohol hatte einen Hydrolysegrad von 88 Mol% und eine Viskosität von 25 mPas (4 %-ige wäßrige Lösung). Danach wurden 1800 g Vinylacetat einemulgiert und das Gemisch auf 60°C erwärmt, wobei gleichzeitig 40 bar Ethylen aufgedrückt wurden. Danach wurde die Polymerisation mit dem Initiatorsystem Ascorbinsäure/Ammoniumpersulfat gestartet, wobei parallel mit der Initiatordosierung 0.1 % Acetaldehyd als 10 %-ige wäßrige Lösung dosiert wurden. Nach 2 Stunden Polymerisationszeit wurden innerhalb 3 Stunden 3820 g Vinylacetat dosiert. Nach ca. 2 Stunden Nachpolymerisationszeit unter Aufrechterhaltung der Initiatordosierungen wurden noch 1400 g einer 10 %-igen hochviskosen Polyvinylalkohollösung zugegeben (Hydrolysegrad 98 Mol%, Viskosität (4 %-ige Lösung) 56 mPas). Die resultierende Dispersion hatte eine Mindestfilmbildungstemperatur MFT von 0°C und einen Feststoffgehalt von 50 % bei einer Brookfield-Viskosität von 15000 mPas bei 20 Upm.

### Beispiel 2:

Es wurden 56 Gewichtsteile einer Polyvinylalkohol-stabilisierten (Hydrolysegrad 88 Mol%, Viskosität 5 mPas) wäßrigen Dispersion (FG: 65 %) eines Vinylacetat-Homopolymerisats (Tg = 30°C), 28 Gewichtsteile einer Polyvinylalkohol-stabilisierten (Hydrolysegrad 88 Mol%, Viskosität 18 mPas) wäßrigen Dispersion (FG: 50%) eines Vinylacetat/Ethylen-Copolymerisats mit einem Ethylengehalt von 20 Gew% und einer Tg von -5°C sowie 10 Gewichtsteile einer 10 %-igen wäßrigen Lösung eines vollverseiften Polyvinylalkohols mit einem Hydrolysegrad von 98 Mol% und einer Viskosität von 56 mPas gemischt.
Die Testergebnisse sind in Tabelle 1 zusammengefaßt.

### Vergleichsbeispiel 1:

Analog der Vorgehensweise der EP-A 702057 wurden 66.6 Gewichtsteile einer Polyvinylalkohol-stabilisierten (Hydrolysegrad 88 Mol%, Viskosität 5 mPas) wäßrigen Dispersion (FG: 65 %) eines Vinylacetat-Homopolymerisats (Tg = 30°C) mit 33.3 Gewichtsteilen einer Polyvinylalkohol-stabilisierten (Hydrolysegrad 88 Mol%, Viskosität 18 mPas) wäßrigen Dispersion (FG: 50%) eines Vinylacetat/Ethylen-Copolymerisats mit einem Ethylengehalt von 20 Gew% und einer Tg von -5°C gemischt. Die Testergebnisse sind in Tabelle 1 zusammengefaßt.

### Vergleichsbeispiel 2:

80 Gewichtsteile einer Polyvinylalkohol-stabilisierten (Hydrolysegrad 88 Mol%, Viskosität 18 mPas) wäßrigen Dispersion (FG: 50%) eines Vinylacetat/Ethylen-Copolymerisats mit einem Ethylengehalt von 20 Gew% und einer Tg von -5°C wurden mit 20 Gewichtsteile einer 10 %-igen wäßrigen Lösung eines vollverseiften Polyvinylalkohols mit einem Hydrolysegrad von 98 Mol% und einer Viskosität von 56 mPas gemischt.
Die Testergebnisse sind in Tabelle 1 zusammengefaßt.

Mit den Klebemitteldispersionen wurden die Klebefestigkeit gemäß DIN EN 204/205 und die Wärmefestigkeit der Verklebungen nach WATT 91 bestimmt, das Abbindeverhalten sowie die Creep-Beständigkeit geprüft.

### Prüfmethoden:

### Klebefestigkeit nach DIN EN 204/205:

Die Probekörper wurden gemäß DIN EN 205 hergestellt. Hierzu wurden jeweils zwei je 5 mm dicke, 130 mm breite und 600 mm lange Buchenholzplatten mit der zu testenden Klebemittel-Dispersion unter gleichmäßig über die Klebefläche verteilem Druck miteinander verklebt, die verklebten Platten in jeweils 150 mm lange Prüfkörper aufgeteilt und diese gemäß DIN EN 204 gelagert.
Für die Prüfung zur Zuordnung in die Beanspruchungsgruppe D1 wurden die Probekörper nach der Verleimung 7 Tage bei Normalklima (23°C, 50 % Luftfeuchtigkeit) gelagert.
Für die Prüfung zur Zuordnung in die Beanspruchungsgruppe D2 wurden die Probekörper nach der Verleimung 7 Tage bei Normalklima (23°C, 50 % Luftfeuchtigkeit), anschließend 3 Stunden in 23°C kaltem Wasser und schließlich weitere 7 Tage in Normalklima gelagert.
Nach der Lagerung wurde mit den Prüfkörpern die Klebefestigkeit im Zug-Scher-Versuch ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt. Die Klebefestigkeit T errechnet sich gemäß DIN EN 205 aus T = F_{Max}/A, wobei A die geklebte Prüffläche in mm² ist.
Die Ergebnisse der Prüfung der Klebefestigkeit sind in Tabelle 1 zusammengefaßt.

### Prüfung der Wärmefestigkeit nach WATT 91:

Die Probekörper wurden gemäß EN 205 hergestellt und aufgeteilt und 7 Tage bei Normklima gelagert. Danach wurden diese in einem auf 80°C vorgeheizten Wärmeschrank bei einer Temperatur von 80°C 1 Stunde lang gelagert. Unmittelbar nach der Wärmelagerung wurde die Wärmefestigkeit im Zug-Scher-Versuch analog DIN EN 205 ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt.
Die Wärmefestigkeit errechnet sich aus F_{Max}/A, wobei A die geklebte Prüffläche in mm² ist.
Die Ergebnisse der Prüfung der Wärmefestigkeit sind in Tabelle 1 zusammengefaßt.

### Prüfung des Abbindeverhaltens:

Analog der Vorgehensweise zur Prüfung der Klebefestigkeit wurden jeweils zwei je 5 mm dicke, 20 mm breite und 70 mm lange Eichenholzplatten mit der zu testenden Klebemittel-Dispersion unter gleichmäßig über die Klebefläche (2 cm²) verteilem Druck miteinander verklebt und die Klebefestigkeit im Zug-Scher-Versuch nach einer Abbindezeit von 2.5 Minuten, 5 Minuten, 10 Minuten und 20 Minuten ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt und daraus die Klebefestigkeit bei der Abbindezeit t mit Tₜ = F_{Max}/A, wobei A die geklebte Prüffläche in mm² ist, errechnet.
Die Ergebnisse der Prüfung des Abbindeverhaltens sind in Tabelle 1 zusammengefaßt.

### Creep-Test:

Der Creep-Test nach dem British Standard B.S. 3544 dient zum Erfassen der Beständigkeit einer Holzleimfuge gegen statische Dauerbelastung. Pro geprüftem Klebstoff wurden 5 Einzelprüfkörper belastet. Die Prüfung wurde mit der original B.S. 3544 Prüfvorrichtung bei Normklima mit einer Belastung von 46 kg durchgeführt. Die Prüfzeit betrug 7 Tage, wobei die nicht durchgebrochenen und durchgebrochenen Prüfkörper täglich erfaßt wurden. Der Creep-Test gilt als bestanden, wenn alle 5 Prüfkörper nach 7 Tagen Prüfzeit nicht durchgebrochen sind.

**Tabelle 1:**

| Beispiel | 1 | 2 | V.bsp. 1 | V.bsp. 2 |
|---|---|---|---|---|
| Klebefestigkeit (N/mm²): | | | | |
| D1-Wert | 12.5 | 11.9 | 10.0 | 9.4 |
| D2-Wert | 11.0 | 10.5 | 9.0 | 4.1 |
| | | | | |
| Wärmefestigkeit (N/mm²): | 5.5 | 5.1 | 3.6 | 1.8 |
| | | | | |

| Abbindeverhalten (N/mm²) : | | | | |
|---|---|---|---|---|
| Tₜ bei 2.5 Minuten | 3.2 | 3.1 | 2.7 | 2.1 |
| Tₜ bei 5 Minuten | 5.1 | 4.9 | 4.4 | 2.7 |
| Tₜ bei 10 Minuten | 7.5 | 7.2 | 6.6 | 3.5 |
| Tₜ bei 20 Minuten | 8.5 | 8.2 | 7.6 | 5.0 |
| | | | | |
| Creep-Test nach B.S. 3544 | + | + | - | - |

| | | | | |
|---|---|---|---|---|
| + = bestanden, | | | | |
| - = nicht bestanden | | | | |

## Patentansprüche

1. VOC-arme Klebemittel-Zusammensetzungen auf der Basis einer Polyvinylalkohol-stabilisierten wäßrigen Vinylester-Ethylen-Copolymerisat-Dispersion mit einem Festgehalt von 30 bis 65 Gew% mit
a) 100 Gewichtsteilen Polyvinylester-Anteil, *enthaltend 80 bis 100 Gew% eines oder mehrerer Vinylester von verzweigten oder unverzweigten Alkylcarbonsäuren mit 1 bis 18 C-Atomen und 0 bis 20 Gew% weitere ein- oder mehrfach ethylenisch ungesättigte Monomereinheiten, jeweils bezogen auf das Gesamtgewicht des Polymeranteils a),*
b) 10 bis 100 Gewichtsteilen Vinylester-Ethylen-Copolymer-Anteil, *enthaltend 60 bis 95 Gew%, eines oder mehrerer Vinylester von verzweigten oder unverzweigten Alkylcarbonsäuren mit 1 bis 18 C-Atomen, 5 bis 20 Gew% Ethylen und 0 bis 20 Gew% weitere ein- oder mehrfach ethylenisch ungesättigte Monomereinheiten, jeweils bezogen auf das Gesamtgewicht des Polymeranteils b),* und
c) 1 bis 10 Gewichtsteilen eines teil- oder vollverseiften Polyvinylalkohols mit einer Höppler-Viskosität von 40 bis 120 mPas (4 %-ige wäßrige Lösung) und einem Hydrolysegrad von 85 bis 100 Mol%.

2. Klebemittel-Zusammensetzungen nach Anspruch 1, **dadurch gekennzeichnet, daß** als Komponente c) ein Polyvinylalkohol mit einem Hydrolysegrad von 98 bis 100 Mol% und einer Höppler-Viskosität von 50 bis 80 mPas, gemessen in 4 %iger wäßriger Lösung (Methode nach Höppler, DIN 53015) enthalten ist.

3. Klebemittel-Zusammensetzungen nach Anspruch 1 oder 2, **dadurch gekennzeichnet, daß** in den Polymeranteilen a) und b) als Vinylester Vinylacetat oder Gemische von Vinylacetat mit einem oder mehreren Vinylestern aus der Gruppe Vinyl-2-ethylhexanoat, Vinyllaurat, 1-Methylvinylacetat, Vinylpivalat, *Vinylester von alpha-verzweigten Monocarbonsäuren mit bis zu 10 C-Atomen*, eingesetzt werden, wobei das Mischungsverhältnis Vinylacetat/Vinylester 50/50 bis 90/10 (w/w) beträgt.

4. Klebemittel-Zusammensetzungen nach Anspruch 1 bis 3, **dadurch gekennzeichnet, daß** in den Polymeranteilen a) und b) jeweils bis 20 Gew% weitere ein- oder mehrfach ethylenisch ungesättigte Monomereinheiten, jeweils bezogen auf das Gesamtgewicht des Polymeranteils a) oder b) copolymerisiert sind.

5. Klebemittel-Zusammensetzungen nach Anspruch 4, **dadurch gekennzeichnet, daß** als weitere ethylenisch ungesättigte Monomereinheiten ein oder mehrere aus der Gruppe der ethylenisch ungesättigten Carbonsäuren, der ethylenisch ungesättigten Carbonsäureamide, der ethylenisch ungesättigten Sulfonsäuren bzw. deren Salze, der mehrfach ethylenisch ungesättigte Comonomere wie Divinyladipat, Diallylmaleat, Allylmethacrylat oder Triallylcyanurat, oder aus der Gruppe nachvernetzende Comonomere wie Acrylamidoglykolsäure (AGA), Methylacrylamidoglykolsäuremethylester (MAGME), N-Methylolacrylamid (NMA), N-Methylolmethacrylamid, N-Methylolallylcarbamat, der Alkylether oder Ester des N-Methylolacrylamids, des N-Methylolmethacrylamids oder des N-Methylolallylcarbamats copolymerisiert sind.

6. Klebemittel-Zusammensetzungen nach Anspruch 1 bis 3, **dadurch gekennzeichnet, daß** als Komponente a) Polyvinylacetat, als Komponente b) Vinylacetat-Ethylen-Copolymerisat mit einem Ethylenanteil von 5 bis 20 Gew% enthalten ist.

7. Klebemittel-Zusammensetzungen nach Anspruch 1 bis 6, **dadurch gekennzeichnet, daß** deren Mindestfilmbildungstemperatur von -5°C bis +5°C beträgt und auf 100 Gewichtsteile des Polyvinylester-Anteils a), 40 bis 60 Gewichtsteile des Vinylester-Ethylen-Copolymer-Anteils b) und 1 bis 5 Gewichtsteile des hochviskosen Polyvinylalkohols c) enthalten sind.

8. Verfahren zur Herstellung VOC-armer Klebemittel-Zusammensetzungen, auf der Basis einer Polyvinylalkohol-stabilisierten wäßrigen Polyvinylester-Dispersion, mit einem Festgehalt von 30 bis 65 Gew% durch radikalische, wäßrige Emulsionspolymerisation in Gegenwart von Dispergiermitteln und Radikalinitiatoren, **dadurch gekennzeichnet, daß**
1) 10 bis 100 Gewichtsteile eines oder mehrerer Vinylester von verzweigten oder unverzweigten Alkylcarbonsäuren mit 1 bis 18 C-Atomen, und
0 bis 20 Gewichtsteile weiterer ein oder mehrfach ethylenisch ungesättigter Monomere,
in Gegenwart von Ethylen, bei einem Ethylendruck von 20 bis 80 bar abs., bis zu einem Umsatz von wenigstens 90 Mol% polymerisiert werden, und
2) weitere 100 Gewichtsteile eines oder mehrerer Vinylester von verzweigten oder unverzweigten Alkylcarbonsäuren mit 1 bis 18 C-Atomen, und 0 bis 50 Gewichtsteile weiterer ein oder mehrfach ethylenisch ungesättigter Monomere, polymerisiert werden,
wobei die Polymerisation gegebenenfalls in Gegenwart von 1 bis 10 Gewichtsteilen eines hochviskosen Polyvinylalkohols mit einer Höppler-Viskosität von 40 bis 120 mPas (4 %-ige wäßrige Lösung) und einem Hydrolysegrad von 85 bis 100 Mol% durchgeführt wird oder dieser nach Abschluß der Polymerisation zugemischt wird.

9. Verwendung der Klebemittel-Zusammensetzungen gemäß Anspruch 1 bis 7 als Klebemittel zum Verkleben poröser Substrate wie Holz, Pappe und Papier, insbesonders als Holzklebstoffe, Parkettklebstoffe, Verpackungsklebstoffe und Buchbindeklebstoffe.

## Claims

1. Low-VOC adhesive compositions based on a polyvinyl-alcohol-stabilized aqueous vinyl ester-ethylene copolymer dispersion having a solids content of 30 to 65% by weight with
a) 100 parts by weight of polyvinyl ester fraction containing 80 to 100% by weight of one or more vinyl esters of branched or unbranched alkyl carboxylic acids having 1 to 18 carbon atoms and 0 to 20% by weight of further mono- or polyethylenically unsaturated monomer units, based in each case on the total weight of the polymer fraction a),
b) 10 to 100 parts by weight of vinyl ester-ethylene copolymer fraction containing 60 to 95% by weight of one or more vinyl esters of branched or unbranched alkyl carboxylic acids having 1 to 18 carbon atoms, 5 to 20% by weight of ethylene and 0 to 20% by weight of further mono- or polyethylenically unsaturated monomer units, based in each case on the total weight of the polymer fraction b), and
c) 1 to 10 parts by weight of a partially or fully hydrolysed polyvinyl alcohol having a Höppler viscosity of 40 to 120 mPas (4% strength aqueous solution) and a degree of hydrolysis of 85 to 100 mol%.

2. Adhesive compositions according to Claim 1, **characterized in that** a polyvinyl alcohol having a degree of hydrolysis of 98 to 100 mol% and a Höppler viscosity of 50 to 80 mPas, measured in 4% strength aqueous solution (Höppler method, DIN 53015) is present as component c).

3. Adhesive compositions according to Claim 1 or 2, **characterized in that** in the polymer fractions a) and b) vinyl acetate or mixtures of vinyl acetate with one or more vinyl esters from the group consisting of vinyl 2-ethylhexanoate, vinyl laurate, 1-methylvinyl acetate, vinyl pivalate and vinyl esters of alpha-branched monocarboxylic acids having up to 10 carbon atoms is or are used as vinyl ester, the vinyl acetate/vinyl ester mixing ratio being 50/50 to 90/10 (w/w).

4. Adhesive compositions according to Claim 1 to 3, **characterized in that** in the polymer fractions a) and b) in each case up to 20% by weight of further mono- or polyethylenically unsaturated monomer units, based in each case on the total weight of the polymer fraction a) or b), have been copolymerized.

5. Adhesive compositions according to Claim 4, **characterized in that** further ethylenically unsaturated monomer units copolymerized have been one or more from the group consisting of ethylenically unsaturated carboxylic acids, ethylenically unsaturated carboxamides, ethylenically unsaturated sulphonic acids and/or their salts, polyethylenically unsaturated comonomers such as divinyl adipate, diallyl maleate, allyl methacrylate or triallyl cyanurate, or from the group consisting of postcrosslinking comonomers such as acrylamidoglycolic acid (AGA), methylacrylamidoglycolic acid methyl ester (MAGME), N-methylolacrylamide (NMA), N-methylolmethacrylamide, N-methylolallylcarbamate, the alkyl ethers or esters of N-methylolacrylamide, of N-methylolmethacrylamide or of N-methylolallylcarbamate.

6. Adhesive compositions according to Claim 1 to 3, **characterized in that** polyvinyl acetate is present as component a), vinyl acetate-ethylene copolymer having an ethylene fraction of 5 to 20% by weight is present as component b).

7. Adhesive compositions according to Claim 1 to 6, **characterized in that** their minimum film formation temperature is from -5°C to +5°C and there are 40 to 60 parts by weight of the vinyl ester-ethylene copolymer fraction b) and 1 to 5 parts by weight of the high-viscosity polyvinyl alcohol c) per 100 parts by weight of the polyvinyl ester fraction a).

8. Process for preparing low-VOC adhesive compositions based on a polyvinyl-alcohol-stabilized aqueous polyvinyl ester dispersion having a solids content of 30 to 65% by weight by free-radical aqueous emulsion polymerization in the presence of dispersants and free-radical initiators, **characterized in that**
1) 10 to 100 parts by weight of one or more vinyl esters of branched or unbranched alkyl carboxylic acids having 1 to 18 carbon atoms, and
0 to 20 parts by weight of further mono- or polyethylenically unsaturated monomers,
are polymerized in the presence of ethylene, with an ethylene pressure of 20 to 80 bar abs., to a conversion of at least 90 mol%, and
2) a further 100 parts by weight of one or more vinyl esters of branched or unbranched alkyl carboxylic acids having 1 to 18 carbon atoms, and 0 to 50 parts by weight of further mono or polyethylenically unsaturated monomers are polymerized,
the polymerization being carried out where appropriate in the presence of 1 to 10 parts by weight of a high-viscosity polyvinyl alcohol having a Höppler viscosity of 40 to 120 mPas (4% strength aqueous solution) and a degree of hydrolysis of 85 to 100 mol% or said polyvinyl alcohol being admixed after the end of the polymerization.

9. Use of the adhesive compositions according to Claim 1 to 7 as adhesives for adhesively bonding porous substrates such as wood, paperboard and paper, especially as wood adhesives, woodblock adhesives, packaging adhesives and bookbinding adhesives.

## Revendications

1. Compositions adhésives pauvres en VOC à base d'une dispersion aqueuse de copolymère d'ester de vinyle et d'éthylène stabilisée par un poly(alcool vinylique) présentant une teneur en matières solides de 30 à 65% en poids avec
a) 100 parties en poids de proportion de poly(ester de vinyle), contenant 80 à 100% en poids d'un ou de plusieurs esters vinyliques d'acides alkylcarboxyliques ramifiés ou non ramifiés comprenant 1 à 18 atomes de carbone et 0 à 20% en poids d'autres unités monomères éthyléniquement monoinsaturées ou polyinsaturées, à chaque fois par rapport au poids total de la proportion de polymère a),
b) 10 à 100 parties en poids de proportion de copolymère d'ester de vinyle et d'éthylène, contenant 60 à 95% en poids d'un ou de plusieurs esters vinyliques d'acides alkylcarboxyliques ramifiés ou non ramifiés comprenant 1 à 18 atomes de carbone, 5 à 20% en poids d'éthylène et 0 à 20% en poids d'autres unités monomères éthyléniquement monoinsaturées ou polyinsaturées, à chaque fois par rapport au poids total de la proportion de polymère b), et
c) 1 à 10 parties en poids d'un poly(alcool vinylique) partiellement ou complètement saponifié présentant une viscosité de Höppler de 40 à 120 mPa.s (solution aqueuse à 4%) et un degré d'hydrolyse de 85 à 100% en mole.

2. Compositions adhésives selon la revendication 1, **caractérisées en ce qu'**un poly(alcool vinylique) présentant un degré d'hydrolyse de 98 à 100% en mole et une viscosité de Höppler de 50 à 80 mPa.s, mesurée dans une solution aqueuse à 4% (procédé selon Höppler, DIN 53015), est contenu comme composant c).

3. Compositions adhésives selon la revendication 1 ou 2, **caractérisées en ce qu'**on utilise dans les proportions de polymère a) et b), comme esters de vinyle, l'acétate de vinyle ou des mélanges d'acétate de vinyle avec un ou plusieurs esters de vinyle du groupe 2-éthylhexanoate de vinyle, laurate de vinyle, acétate de 1-méthylvinyle, pivalate de vinyle, esters vinyliques d'acides monocarboxyliques ramifiés en position alpha, comprenant jusqu'à 10 atomes de carbone, le rapport de mélange acétate de vinyle/ester de vinyle étant de 50/50 à 90/10 (P/P).

4. Compositions adhésives selon les revendications 1 à 3, **caractérisées en ce qu'**on a copolymérisé dans les proportions de polymère a) et b) à chaque fois jusqu'à 20% en poids d'autres unités monomères éthyléniquement monoinsaturées ou polyinsaturées, à chaque fois par rapport au poids total de la proportion de polymère a) ou b).

5. Compositions adhésives selon la revendication 4, **caractérisées en ce qu'**on a copolymérisé comme autres unités monomères éthyléniquement insaturées une ou plusieurs unités du groupe des acides carboxyliques éthyléniquement insaturés, des amides d'acide carboxylique éthyléniquement insaturé, des acides sulfoniques éthyléniquement insaturés ou, selon le cas, de leurs sels, des comonomères éthyléniquement polyinsaturés, tels que l'adipate de divinyle, le maléate de diallyle, le méthacrylate d'allyle ou le cyanurate de triallyle, ou du groupe des comonomères à post-réticulation, tels que l'acide acrylamidoglycolique (AGA), l'ester méthylique de l'acide méthylacrylamidoglycolique (MAGME), le N-méthylolacrylamide (NMA), le N-méthylolméthacrylamide, le N-méthylolallylcarbamate, des alkyléthers ou des esters du N-méthylolacrylamide, du N-méthylolméthacrylamide ou du N-méthylolallylcarbamate.

6. Compositions adhésives selon les revendications 1 à 3, **caractérisées en ce qu'**un poly(acétate de vinyle) est contenu comme composant a) et un copolymère d'acétate de vinyle et d'éthylène présentant une proportion d'éthylène de 5 à 20% en poids est contenu comme composant b).

7. Compositions adhésives selon les revendications 1 à 6, **caractérisées en ce que** leur température minimale de formation de film est de -5°C à +5°C et 40 à 60 parties en poids de la proportion b) de copolymère d'ester de vinyle et d'éthylène et 1 à 5 parties en poids du poly(alcool vinylique) hautement visqueux c) sont contenus par rapport à 100 parties en poids de la proportion a) de poly(ester de vinyle).

8. Procédé pour la préparation de compositions adhésives pauvres en VOC, à base d'une dispersion aqueuse de poly(ester de vinyle) stabilisée avec un poly(alcool vinylique), présentant une teneur en matières solides de 30 à 65% en poids par polymérisation radicalaire dans une émulsion aqueuse en présence de dispersants et d'initiateurs de radicaux, **caractérisé en ce qu'**on
1) polymérise 10 à 100 parties en poids d'un ou de plusieurs esters vinyliques d'acides alkylcarboxyliques ramifiés ou non ramifiés comprenant 1 à 18 atomes de carbone et
0 à 20 parties en poids d'autres monomères éthyléniquement monoinsaturés ou polyinsaturés,
en présence d'éthylène, à une pression d'éthylène de 20 à 80 bars abs. jusqu'à une transformation d'au moins 90% en mole et
2) polymérise 100 autres parties en poids d'un ou de plusieurs esters vinyliques d'acides alkylcarboxyliques ramifiés ou non ramifiés comprenant 1 à 18 atomes de carbone, et 0 à 50 parties en poids d'autres monomères éthyléniquement monoinsaturés ou polyinsaturés, la polymérisation étant le cas échéant réalisée en présence de 1 à 10 parties en poids d'un poly(alcool vinylique) hautement visqueux présentant une viscosité de Höppler de 40 à 120 mPa.s (solution aqueuse à 4%) et un degré d'hydrolyse de 85 à 100% en mole ou celui-ci étant ajouté après la polymérisation.

9. Utilisation des compositions adhésives selon les revendications 1 à 7 comme adhésifs pour le collage de substrats poreux tels que le bois, le carton et le papier, en particulier comme colles à bois, colles à parquet, colles d'emballage et colles de reliure de livres.
